(19) Europäisches Patentamt / European Patent Office / Office européen des brevets

(11) **EP 4 389 566 A1**

(12) **DEMANDE DE BREVET EUROPEEN**

(43) Date de publication:
**26.06.2024  Bulletin 2024/26**

(21) Numéro de dépôt: **23218250.1**

(22) Date de dépôt: **19.12.2023**

(51) Classification Internationale des Brevets (IPC):
**B62D 15/02** *(2006.01)*        **G01S 7/288** *(2006.01)*
**G01S 13/53** *(2006.01)*

(52) Classification Coopérative des Brevets (CPC):
**G01S 7/288; G01S 13/53**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **20.12.2022  FR 2213944**

(71) Demandeur: **THALES**
**92190 Meudon (FR)**

(72) Inventeurs:
• **GILLIOT, Adrien**
  **33700 MERIGNAC (FR)**
• **CORRETJA, Vincent**
  **33700 MERIGNAC (FR)**

(74) Mandataire: **Lavoix**
**2, place d'Estienne d'Orves**
**75441 Paris Cedex 09 (FR)**

(54) **PROCÉDÉ DE MESURE DE LA PERFORMANCE D'UN DISPOSITIF DE TAUX DE FAUSSE ALARME CONSTANT D'UN CAPTEUR, PROCÉDÉ ET DISPOSITIFS ASSOCIÉS**

(57)     L'invention porte sur un procédé de mesure de la performance d'un dispositif TFAC d'un capteur à observer un environnement, le dispositif TFAC étant pourvu d'un estimateur déterminant une estimation des paramètres liés aux bruits affectant le capteur en fonction de paramètres liés à l'environnement, le procédé de mesure comprenant les étapes de:
- estimation de paramètres liés aux bruits,
- obtention de seuils de détection pour le dispositif TFAC,
- caractérisation des erreurs d'estimations de l'estimateur du dispositif TFAC,
- détermination de chaque seuil de détection susceptible d'être effectivement utilisé par le dispositif TFAC du fait des erreurs d'estimations, et
- une étape de calcul de la performance du dispositif TFAC sur la base des seuils de détection déterminés.

FIG.2

EP 4 389 566 A1

Processed by Luminess, 75001 PARIS (FR)

**Description**

La présente invention concerne un procédé de mesure de la performance d'un dispositif de taux de fausse alarme constant d'un capteur. La présente invention se rapporte également à un procédé d'observation mettant en oeuvre les étapes du procédé de détermination. L'invention se rapporte enfin à des dispositifs, à savoir un calculateur, un système de détection et un véhicule.

Dans le domaine de la détection, les systèmes de détection utilisent usuellement des procédés de traitement de signaux. Ces procédés ont pour tâche d'extraire dans un signal reçu une ou plusieurs portions correspondant à une information utile sur la partie d'environnement faisant l'objet de la détection.

S'il est considéré le cas d'un radar, l'information utile correspond à des ondes réfléchies par des objets. Ces ondes réfléchies ou échos peuvent avoir un niveau variable en fonction de la nature et des dimensions des objets considérés.

Pour les cas où le signal réfléchi par l'objet présente une amplitude faible, le traitement du signal radar cherche à extraire ce signal réfléchi du bruit thermique ou du fouillis ambiant reçu par le récepteur du radar et qui accompagnent ce signal. Le terme « fouillis » désigne dans ce cas le signal réfléchi par tout élément ne faisant pas l'objet de la détection. Ce peut être par exemple le signal réfléchi par des éléments de relief, des constructions, des étendues d'eau, de la végétation ou encore des phénomènes atmosphériques tels que des nuages.

Une telle opération d'extraction est, par exemple, mise en oeuvre par un dispositif de taux de fausse alarme constant. L'acronyme TFAC est souvent utilisé pour désigner le terme de « taux de fausse alarme constant », de sorte que le dispositif est souvent dénommé dispositif de TFAC.

De manière générale, un dispositif de TFAC fonctionne en analysant tout signal reçu par le récepteur par mise en oeuvre d'une suite d'opérations. Par exemple, le dispositif de TFAC soustrait au signal incident un niveau moyen de signal ambiant. La différence est ensuite comparée à un seuil de détection. Tout signal reçu dont le niveau dépasse le seuil de détection est considéré comme représentatif de la présence d'un objet à la distance considérée correspondant à l'instant de réception du signal par le récepteur du radar.

Ainsi, le bon fonctionnement du dispositif de TFAC dépend beaucoup de la justesse de la valeur du seuil de détection. De ce fait, en pratique, ce n'est pas un seuil de détection mais une pluralité de seuils de détection qui sont utilisés, ces seuils dépendant des conditions environnementales dans lesquelles opère le capteur.

Toutefois, les dispositifs de TFAC présentent des performances dégradées dans certaines circonstances, notamment lorsque l'environnement comporte des zones de nature différente engendrant des variations importantes du niveau de fouillis.

Il existe donc un besoin pour un procédé de mesure de la performance d'un dispositif de taux de fausse alarme constant d'un capteur qui permette d'obtenir des mesures de la performance de bonne qualité et ce pour toutes les environnements dans lesquels le capteur est amené à intervenir.

A cet effet, la description décrit un procédé de mesure de la performance d'un dispositif de taux de fausse alarme constant d'un capteur,

le capteur étant propre à observer un environnement, le dispositif de taux de fausse alarme constant étant pourvu d'un estimateur propre à déterminer une estimation des paramètres liés aux bruits affectant le capteur en fonction de paramètres liés à l'environnement que le capteur observe,
le procédé de mesure étant mis en oeuvre par un calculateur et comprenant :

- une étape d'estimation de paramètres liés aux bruits affectant le capteur, pour obtenir un vecteur de paramètres,
- une étape d'obtention de seuils de détection pour le dispositif de taux de fausse alarme constant,
- une étape de caractérisation des erreurs d'estimations de l'estimateur du dispositif de taux de fausse alarme constant, pour obtenir des paramètres relatifs aux erreurs d'estimations,
- une étape de détermination de la valeur de chaque seuil de détection susceptible d'être effectivement utilisé par le dispositif de taux de fausse alarme constant du fait des erreurs d'estimations de l'estimateur du dispositif de taux de fausse alarme constant pour toutes les configurations possibles du vecteur de paramètres, pour obtenir un ensemble de seuils de détection déterminés, l'étape de détermination utilisant les paramètres relatifs aux erreurs d'estimations pour déterminer le seuil de détection effectivement utilisé par le dispositif de taux de fausse alarme constant, et
- une étape de calcul de la performance du dispositif de taux de fausse alarme constant sur la base des seuils de détection déterminés.

Il convient de comprendre ici que les étapes sont réalisées sans utilisation de données réelles. Elles peuvent donc être réalisées hors-ligne, ce qui est un avantage important du procédé. La performance est ici obtenue sans avoir recours à une utilisation prolongée du système de détection pour que celui-ci croise un ensemble représentatif de cas d'utilisation.

Dans ce contexte, un bruit affectant le capteur recouvre l'ensemble des contributions à la détection du capteur qui n'est pas une cible.

Les principales contributions aux bruits proviennent donc du bruit thermique présent dans les circuits électroniques du capteur, du fouillis (échos radar provenant de la surface océanique, de la terre et/ou de tout élément de surface n'étant pas une cible) et de perturbations atmosphériques (par exemple des nuages ou de la pluie).

Selon des modes de réalisation particuliers, le procédé de mesure présente une ou plusieurs des caractéristiques suivantes, prise(s) isolément ou selon toutes les combinaisons techniquement possibles :

- l'étape de calcul comporte la détermination de la probabilité de fausse alarme du dispositif de taux de fausse alarme constant avec les seuils de détection déterminés.
- lors de l'étape d'obtention, il est également obtenu une probabilité de fausse alarme, dite probabilité de fausse alarme idéale, associée aux performances des seuils de détection pour un fonctionnement idéal du dispositif de taux de fausse alarme constant.
- la performance est calculée comme le rapport entre la probabilité de fausse alarme calculée et la probabilité de fausse alarme idéale.
- le vecteur de paramètres comporte au moins un paramètre lié au bruit thermique du capteur et au moins un paramètre lié au bruit généré par l'environnement que le capteur observe, cet au moins un paramètre lié au bruit généré par l'environnement que le capteur observe caractérisant, de préférence, le fouillis de mer.
- lors de l'étape d'obtention, les seuils de détection pour le dispositif de taux de fausse alarme constant sont calculés pour que, pour toutes les configurations possibles du vecteur de paramètres, le dispositif de taux de fausse alarme constant fonctionne à une probabilité de fausse alarme prédéfinie.

La description concerne aussi Procédé d'observation d'un environnement par un capteur propre à observer l'environnement, le capteur faisant partie d'un système de détection comprenant :

- un capteur propre à observer un environnement,
- un dispositif de taux de fausse alarme constant du capteur, le dispositif de taux de fausse alarme constant étant pourvu d'un estimateur propre à déterminer une estimation des paramètres liés aux bruits affectant le capteur en fonction de paramètres liés à l'environnement que le capteur observe, et
- un calculateur,

le procédé d'observation comportant :

- une étape de mise en oeuvre d'un procédé de mesure de la performance du dispositif de taux de fausse alarme constant du capteur, le procédé de mesure étant tel que précédemment décrit,
- une étape de réception d'ondes provenant de l'environnement,
- une étape d'analyse des ondes reçues par le dispositif de taux de fausse alarme constant pour déterminer si les ondes comportent uniquement du bruit, et
- une étape de mise en oeuvre d'une action en fonction de la performance déterminée, l'action étant choisie parmi une émission d'une alarme, une annulation de l'analyse, une demande de réitération de l'étape d'analyse avec des seuils différents ou une utilisation d'un autre dispositif de taux de fausse alarme constant du capteur lorsqu'un tel dispositif est présent dans le système de détection.

La description se rapporte également à un calculateur propre à mesurer la performance d'un dispositif de taux de fausse alarme constant d'un capteur,

le capteur étant propre à observer un environnement, le dispositif de taux de fausse alarme constant étant pourvu d'un estimateur propre à déterminer une estimation des paramètres liés aux bruits affectant le capteur en fonction de paramètres liés à l'environnement que le capteur observe,
le calculateur étant propre à :

- estimer des paramètres liés aux bruits affectant le capteur, pour obtenir un vecteur de paramètres,
- obtenir des seuils de détection pour le dispositif de taux de fausse alarme constant,
- caractériser des erreurs d'estimations de l'estimateur du dispositif de taux de fausse alarme constant, pour obtenir des paramètres relatifs aux erreurs d'estimations, et
- déterminer la valeur de chaque seuil de détection susceptible d'être effectivement utilisée par le dispositif de taux de fausse alarme constant du fait des erreurs d'estimations de l'estimateur du dispositif de taux de fausse alarme constant pour toutes les configurations possibles du vecteur de paramètres, pour obtenir un ensemble de seuils de détection déterminés, la détermination utilisant les paramètres relatifs aux erreurs d'estimations pour déterminer le seuil de détection effectivement utilisé par le dispositif de taux de fausse alarme constant, et

- calculer la performance du dispositif de taux de fausse alarme constant sur la base des seuils de détection déterminés.

La description concerne aussi à un système de détection comprenant :

- un capteur propre à observer un environnement,
- un dispositif de taux de fausse alarme constant du capteur, le dispositif de taux de fausse alarme constant étant pourvu d'un estimateur propre à déterminer une estimation des paramètres liés aux bruits affectant le capteur en fonction de paramètres liés à l'environnement que le capteur observe, et
- un calculateur tel que précédemment décrit.

La description se rapporte également à un véhicule comportant un système de détection tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un exemple de véhicule,
- la figure 2 est une représentation schématique d'un ordinogramme correspondant à un exemple de mise en oeuvre d'un procédé de mesure de la performance d'une unité du véhicule de la figure 1,
- la figure 3 est une représentation schématique d'un élément utilisé de la mise en oeuvre d'une étape du procédé de mesure de la figure 2, et
- la figure 4 est une représentation schématique d'une opération mise en oeuvre lors d'une étape du procédé de mesure de la figure 2.

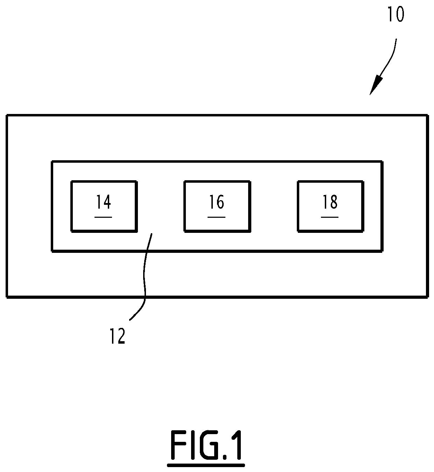

Un véhicule 10 est illustré schématiquement sur la figure 1.

Le véhicule 10 est tout type de véhicule et en particulier, peut être un véhicule terrestre, aérien ou marin.

Le véhicule 10 comporte un système de détection 12 propre à détecter des éléments dans un environnement.

En ce sens, le système de détection 12 peut être utilisé comme système de surveillance.

Le système de détection 12 comporte un capteur 14, un dispositif 16 de taux de fausse alarme constant et un calculateur 18.

Le capteur 14 est, par exemple, un radar.

Plusieurs types de radar peuvent être envisagés, tel un radar de poursuite, un radar de détection.

Le radar peut être utilisé au sol, en mer ou dans une plateforme mobile, notamment un avion.

En variante, le capteur 14 est un sonar.

Selon une autre variante, le capteur 14 est un capteur optronique.

Par exemple, le capteur 14 est un détecteur infrarouge ou une caméra.

Comme indiqué précédemment, le dispositif 16 de TFAC est propre à déterminer les signaux dépassant un seuil de détection dépendant de l'environnement dans lequel le capteur 14 opère.

Le calculateur 18 est un dispositif embarqué propre à contrôler l'ensemble des éléments du système de détection 12.

Selon l'exemple décrit, le calculateur 18 est propre à mettre en oeuvre un procédé de mesure de la performance du dispositif 16 de TFAC.

Pour simplifier, il est supposé ici que le calculateur 18 met en oeuvre l'ensemble des étapes du procédé de mesure.

Toutefois, dans d'autres modes de réalisation, certaines étapes peuvent être réalisées hors ligne en fonction des données accessibles.

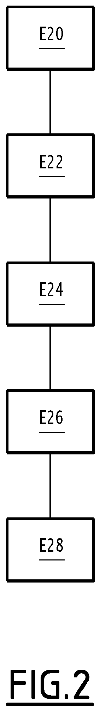

Le fonctionnement du calculateur 18 est maintenant décrit en référence à la figure 2 qui illustre un exemple de mise en oeuvre d'un tel procédé de mesure.

Le procédé cherche à obtenir une mesure objective de la performance du dispositif 16 de TFAC.

La performance sera définie ultérieurement à travers des définitions spécifiques mais reflète dans chacun de ces exemples, une quantification du bon fonctionnement du dispositif 16 de TFAC sur plusieurs cas d'utilisation (ou réciproquement du nombre d'erreurs).

Le procédé de détermination comporte, selon l'exemple de la figure 2, cinq étapes qui sont une étape d'estimation E20, une étape d'obtention E22, une étape de caractérisation E24, une étape de détermination E26 et une étape de calcul E28.

Lors de l'étape d'estimation E20, le calculateur 18 reçoit un ensemble d'observations de l'environnement par le capteur 14.

Le calculateur 18 estime à partir de ces observations un vecteur de paramètres $C$.

Les paramètres du vecteur de paramètres $C$ permettent de caractériser les phénomènes provoquant des signaux parasites au niveau du capteur 14.

Les paramètres du vecteur de paramètres $C$ sont ainsi des paramètres caractérisant la loi de probabilité d'occurrence de ces phénomènes.

Ces paramètres peuvent généralement être estimés aisément, notamment à l'aide de l'altitude, de la géométrie d'observation ou de la température du bruit thermique.

Le vecteur de paramètres $C$ est donc un ensemble de paramètres liés aux bruits affectant le capteur 14.

A titre d'exemple particulier, dans le cas d'un capteur évoluant dans un environnement comportant à la fois de l'air et de l'eau, les phénomènes parasitaires ou nuisances sont de deux types, un premier phénomène lié aux échos de mer et un deuxième phénomène liée au bruit thermique du système de détection 12.

Le premier phénomène présente une puissance souvent modélisée par une loi en $K(\mu_c, v)$, avec $\mu_c$ la puissance moyenne et $v$ le facteur de forme de la loi, décrivant l'impulsivité du fouillis de mer.

Dans cette expression, le facteur de forme $v$ (impulsivité) est le plus déterminant.

Selon l'exemple décrit, le comportement du deuxième phénomène est donné par un paramètre $\mu_n$ qui correspond à la puissance moyenne. Le bruit thermique est alors usuellement modélisé par une loi en puissance du type

$$Exp\left(\frac{1}{\mu_n}\right).$$

Alternativement, le deuxième phénomène peut être caractérisé par un paramètre $RCB$, l'acronyme RCB renvoyant à la dénomination correspondante de 'rapport Clutter à Bruit' (le terme clutter est une autre désignation du fouillis). Le paramètre $RCB$ est donné par la puissance du fouillis de mer relativement au bruit thermique.

Ainsi, il peut être envisagé dans l'exemple décrit que le vecteur de paramètres $C$ comporte deux paramètres, à savoir l'impulsivité v du fouillis de mer et le paramètre RCB de rapport clutter à bruit.

A travers cet exemple, il apparaît que le vecteur de paramètres $C$ comporte, de préférence, un paramètre lié au bruit thermique du capteur 14 et un paramètre lié au bruit généré par l'environnement que le capteur 14 observe.

Le calculateur 18 dispose ainsi du vecteur de paramètres $C$ à l'issue de la mise en oeuvre de l'étape d'estimation E20.

Le vecteur de paramètres $C$ est propre à prendre un ensemble de valeurs correspondant à l'ensemble des valeurs possibles pour chaque paramètre. Chaque ensemble de valeurs possibles est une configuration possible du vecteur de paramètres $C$.

L'objectif du procédé décrit est de déterminer la performance du dispositif 16 de TFAC sur l'ensemble des configurations possible du vecteur de paramètres $C$.

Lors de l'étape d'obtention E22, le calculateur 18 obtient des seuils de détection pour le dispositif 16 de TFAC.

Les seuils de détection sont l'ensemble des seuils utilisés par le dispositif 16 de TFAC pour effectuer ses analyses d'un signal incident.

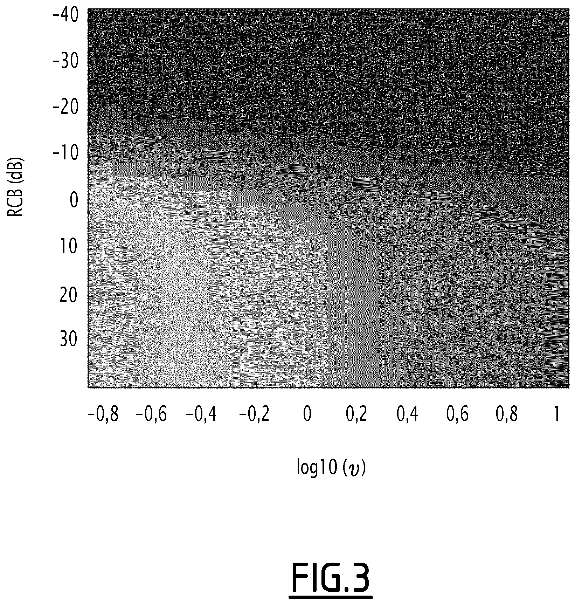

Selon l'exemple particulier décrit, les seuils de détection sont fournis sous forme d'une carte visible sur la figure 3.

Dans cette figure, il est représenté la valeur du seuil sous forme de niveaux de gris en fonction des valeurs de l'impulsivité v du fouillis de mer (sous forme du $\log_{10}(v)$ ici) et du paramètre RCB de rapport clutter à bruit (exprimé en dB). Chaque niveau de gris donne la valeur du seuil pour une case correspondant à un ensemble de valeurs des deux paramètres.

Cela correspond donc à une table donnant une valeur du seuil pour une valeur de l'impulsivité v du fouillis de mer et de paramètre RCB de rapport clutter à bruit.

Lors de l'étape d'obtention 22, selon l'exemple décrit, le calculateur 18 obtient également une probabilité de fausse alarme, dite probabilité de fausse alarme idéale, associée aux performances des seuils de détection pour un fonctionnement idéal du dispositif 16 de TFAC.

L'ensemble des informations précitées (valeurs de seuil de détection et la probabilité de fausse alarme idéale) peuvent être envoyées au calculateur 18.

Alternativement, ces éléments peuvent être calculés par le calculateur 18.

Plus précisément, selon un exemple, le calculateur 18 calcule le seuil de détection en prenant en compte le vecteur de paramètres et une probabilité de fausse alarme prédéfini qui correspond à la probabilité de fausse alarme idéale.

La probabilité de fausse alarme idéale est appelée $Pfa_{idéale}$ dans la suite de la description.

Un tel calcul est réalisable par tout moyen connu de l'homme du métier.

A titre d'exemple particulier pour le cas décrit d'un capteur évoluant dans un environnement comportant à la fois de l'air et de l'eau, le calculateur 18 peut mettre en oeuvre les opérations qui suivent.

Le calculateur 18 détermine usuellement une statistique de test $x$ maximisant la probabilité de détection pour une probabilité de fausse alarme idéale $Pfa_{idéale}$ = 1 - $\alpha$.

Pour cela, le calculateur 18 peut avantageusement utiliser les modèles de Swerling, les distributions statistiques des différentes sources de bruit (fouillis et bruit thermique pour l'exemple décrit ici), et le Lemme de Neyman-Pearson.

Une fois l'expression de la statistique de test optimale connue, le calculateur 18 évalue la distribution statistique $f_n(x,C)$ de la statistique de test $x$ sous l'hypothèse qu'elle ait pour origine du signal de bruit.

Le calculateur 18 obtient cette distribution $f_n$ analytiquement ou par mise en oeuvre d'une méthode de Monte-Carlo.

Le calculateur 18 détermine alors un premier seuil de détection $S1_{Pfa_{idéale}}$ par inversion de l'intégrale suivante :

$$Pfa_{idéale} = \int_{B_{inf}}^{S1_{Pfa_{idéale}}} f_{nuisance}(x,C) \, dx$$

Avec $B_{inf}$ la borne inférieure du support de $x$ (si $x \in \mathbb{R}^+$, $B_{inf}$ = 0).

Pour une loi simple, le calculateur 18 peut effectuer une telle inversion analytiquement.

Mais dans le cas complexe décrit, le calculateur 18 réalise l'inversion numériquement en un ensemble de points (paramétrisations de $C$) par dichotomie.

Selon un autre exemple, le calculateur 18 utilise une méthode des moindres carrés combinée à une descente de gradient.

Ainsi, à l'issue de l'étape d'obtention E22, le calculateur 18 dispose de seuils de détection pour le dispositif 16 de TFAC pour que, pour toutes les configurations possibles du vecteur de paramètres et en l'absence d'erreurs d'estimation sur ce vecteur de paramètre (i.e. le calculateur 18 connaît parfaitement la paramétrisation des lois statistiques des nuisances fouillis et bruit thermique), le dispositif 16 de TFAC fonctionne à une probabilité de fausse alarme idéale.

Lors de l'étape de caractérisation E24, le calculateur 18 cherche à caractériser les performances d'un estimateur noté $\tilde{C}$ du vecteur de paramètres $C$.

L'estimateur $\tilde{C}$ est un estimateur dont est pourvu le dispositif 16 de TFAC.

L'estimateur $\tilde{C}$ est propre à déterminer une estimation des paramètres liés aux bruits affectant le capteur 14 en fonction de paramètres liés à l'environnement que le capteur 14 observe.

A titre d'exemple de paramètres liés à l'environnement, il peut être cité l'altitude du véhicule 10, la nature de l'environnement (terre ou eau par exemple) ou des informations météorologiques (présence de nuages, de pluie ou autres).

Cet estimateur $\tilde{C}$ correspond donc à une fonctionnalité du dispositif 16 de TFAC, pouvant prendre toute forme connue pour l'homme du métier.

En l'occurrence, il s'agit ici de caractériser les erreurs d'estimations commises par l'estimateur $\tilde{C}$.

Selon un exemple, les performances sont exprimées sous forme des paramètres d'une loi de distribution.

Une telle étape peut être mise en oeuvre par une résolution analytique lorsque les distributions des phénomènes générant des nuisances sont connues.

Alternativement, il est possible d'utiliser des méthodes de Monte-Carlo ou des méthodes d'intégration numérique.

Selon un autre exemple, les performances sont exprimées sous forme de moments.

En notant $C_0$ le vrai vecteur de paramètres à estimer, une réalisation de cette étape de caractérisation peut donc consister à quantifier théoriquement les deux premiers moments de l'estimateur $\tilde{C}$ pour chaque paramétrisation $C_0$ (valeurs possibles des paramètres) du vecteur de paramètres C.

Les deux premiers moments de l'estimateur $\tilde{C}$ sont définis comme suit :

$$Biais_{\hat{C}}(C_0) = E[\hat{C} - C_0]$$

$$Var_{\hat{C}}(C_0) = E\left[(\hat{C} - C_0)^2\right]$$

Avec E[.] l'opérateur d'espérance mathématique.

Le premier moment ($Biais_{\tilde{C}}(C_0)$) correspond à l'erreur d'estimation moyenne tandis que le deuxième moment ($Var_{\tilde{C}}(C_0)$) correspond à la variance de l'erreur d'estimation.

Il serait également possible de considérer des moments d'ordre supérieur dans la mise en oeuvre de l'étape de caractérisation E24.

Pour reprendre l'exemple précité concernant un capteur évoluant dans un environnement comportant à la fois de l'air et de l'eau, il est observé que les dispositifs 16 de TFAC ont généralement pour défaut de sous-évaluer la valeur de l'impulsivité v du fouillis de mer.

Les valeurs caractérisant la performance permettent de quantifier un tel défaut d'estimation.

A l'issue de l'étape de caractérisation E24, le calculateur 18 dispose donc également de valeurs caractérisant les erreurs d'estimation du dispositif 16 de TFAC.

A titre de remarque, on comprendra que les seuils de détection prennent uniquement en compte les paramètres du vecteur de paramètres *C* et ne prennent pas en compte les valeurs caractérisant la performance d'estimation du dispositif 16 de TFAC. Les seuils de détection ne sont donc pas parfaitement fiables.

Les étapes de détermination E26 et de calcul E28 visent à calculer l'écart de fiabilité entre le cas idéal associé à l'utilisation de ces seuils de détection par un dispositif idéal de TFAC et l'utilisation réelle de ces seuils de détection par le dispositif 16 de TFAC qui est imparfaite.

Lors de l'étape de détermination E26, le calculateur 18 détermine la valeur de de chaque seuil de détection effectivement utilisé par le dispositif 16 de TFAC du fait des erreurs d'estimations de l'estimateur du dispositif 16 de TFAC pour toutes les configurations possibles du vecteur de paramètres *C.*

Pour cela, le calculateur 18 détermine pour une configuration possible du vecteur de paramètres *C* les valeurs de paramètres que l'estimateur $\tilde{C}$ va estimer.

Dans un cas idéal, le seuil de détection utilisé serait le seuil de détection correspondant à la configuration possible, ce seuil étant le seuil obtenu.

Toutefois, du fait de l'existence d'un biais et d'une variance, le dispositif 16 de TFAC considère que la configuration est une autre configuration ou plusieurs autres configurations et va lire la valeur de seuil associée.

Au pire cas, la valeur de seuil lue est la valeur minimale de l'ensemble des valeurs lues.

Toutefois, il est également possible de prendre une moyenne de l'ensemble des valeurs pour déterminer la valeur du seuil de détection.

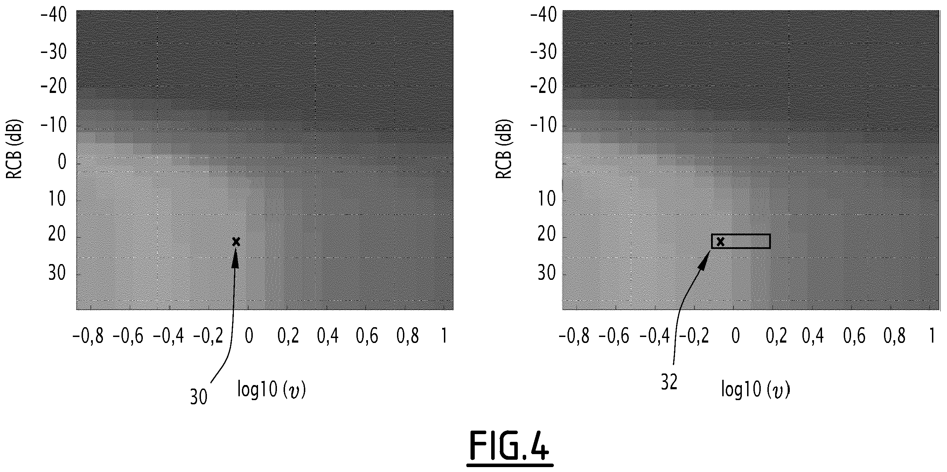

Pour illustrer cette opération, le lecteur peut se reporter à la figure 4 qui correspond à un exemple toujours pour le cas d'une détection hybride air/eau.

Le cas de la figure 4 correspond au cas d'une configuration possible du vecteur de paramètres *C* nommée $C_1$ correspondant à $C_1 = [RCB_1 \; v_1]^T$.

Pour cette configuration $C_1$, il a été déterminé une valeur assurant le respect du taux de fausse alarme idéal *Pfa.* Cette valeur est indiquée par le signe de référence 30 sur la figure 4.

Il est supposé pour cette configuration, l'erreur que l'estimateur $\tilde{C}$ est susceptible de commettre sur l'estimation du paramètre *RCB* est inférieure à la résolution du graphe (la taille d'une case sur la figure 7 est plus grande que l'erreur commise par l'estimateur $\tilde{C}$ sur le paramètre *RCB*) alors que pour la composante relative à l'impulsivité, l'estimateur $\tilde{C}$ est susceptible de commettre une erreur allant jusqu'à 4 cases. Ces valeurs sont issues du calcul réalisé à l'étape de caractérisation E24.

L'ensemble des valeurs de premiers seuils de détection que le dispositif 16 de TFAC est susceptible d'utiliser compte-tenu des erreurs d'estimations correspond dans ce cas à un rectangle 32 représenté sur la figure 4.

Cette correspondance entre cette forme rectangulaire 32 et les erreurs d'estimation déterminés peut s'expliquer comme suit.

Le dimensionnement précis de la zone suppose de connaitre la probabilité a priori d'apparition de chaque configuration du vecteur de paramètres *C*, de façon à dimensionner $X = [X_{INF}, X_{SUP}]$ la zone effectivement vue par le dispositif 16 de TFAC dans la carte qui peut être qualifié telle que (cas unidimensionnel) :

$$Pfa = \int_{i_{INF}}^{i_{SUP}} \left( \int_{X_{INF}}^{X_{SUP}} \left( \int_{T_{marge}(Pfa,C_j)}^{Y_{SUP}} f_Y(y|C_i)dy \right) f_{\hat{C}}(C_j|C_i)dC_j \right) f_C(C_i)dC_i$$

Avec :

- $f_Y(y|C_i)$ la distribution des statistiques de test *Y* sachant la configuration $C_i$, i étant un indice désignant l'ensemble des configurations $C_i$

- $f\tilde{C}(C_j|C_i)$ la distribution des estimations données par l'estimateur $\tilde{C}$ du vecteur de paramètres $C$ pour la configuration $C_i$,
- $f_C(C_i)$ la distribution a priori des configurations $C_i$ du vecteur de paramètres $C$,
- $[i_{INF}, i_{SUP}]$ le support du vecteur de paramètres $C$ (configurations susceptibles d'être rencontrées en environnement réel)
- $Y_{SUP}$ la limite supérieure du support de la statistique de test $Y$

Ainsi formulé, le problème à résoudre (dimensionner la zone $X$) nécessite également de disposer de la table de seuil margée $T_{marge}$, qui est margée en utilisant la plage $X$.

En première approximation, on peut considérer la distribution a priori des configurations $C_i$ comme étant uniforme, et le maintien de la *Pfa* peut être approximativement obtenue de façon simplifiée.

Pour l'exemple décrit précédemment, pour une configuration $C_i$ de $C$, la caractérisation de l'estimateur $\tilde{C}$ donne :

- Un vecteur de biais $\mu_{C_i}$
- Une matrice de covariance de l'erreur $\Sigma_{C_i}$

En application du principe d'entropie maximale, la distribution des erreurs d'estimation de $\tilde{C}$ pour la configuration $C_i$ correspond ainsi à la formule suivante :

$$\hat{C} \sim \mathcal{N}\left(\mu_{C_i}, \Sigma_{C_i}\right)$$

Avec $\mathcal{N}$ la loi normale.

Il s'agit ainsi de respecter le critère suivant :

$$\mathbb{P}\left(\sqrt{(\hat{C} - \mu_{C_i})^T \Sigma_{C_i}^{-1}(\hat{C} - \mu_{C_i})} > \frac{X_{SUP} - X_{INF}}{2}\right) = c.Pfa$$

Avec c < 1 de façon à ce que la zone soit « suffisamment grande » au regard du taux de fausse alarme prédéfini *Pfa*. Cela correspond au fait que la probabilité que l'estimateur $\tilde{C}$ tombe hors de la zone est négligeable au regard taux de fausse alarme prédéfini *Pfa*.

Dans le cas d'un vecteur de paramètres $C$ unidimensionnel, on obtient donc :

$$\frac{X_{SUP} - X_{INF}}{2} = \sqrt{2}.\mathrm{erf}^{-1}(1 - c.Pfa)$$

Et de façon général, le critère définit la zone à rehausser comme une ellipsoïde d'équation :

$$\sqrt{(C_r - \mu_{C_i})^T \Sigma_{C_i}^{-1}(C_r - \mu_{C_i})} \le \frac{X_{SUP} - X_{INF}}{2}$$

Avec $C_r$ coordonnées des points à rehausser.

Après discrétisation, cette ellipsoïde correspond au rectangle visible sur la figure 4.

L'ensemble des opérations qui viennent d'être décrites sont répétées pour chaque configuration.

Le calculateur 18 détermine ainsi pour chaque configuration possible un nouveau seuil de détection. Ce nouveau seuil de détection est déterminé par le seuil de détection effectivement utilisé par le dispositif 16 de TFAC.

Lors de l'étape de calcul E28, le calculateur 18 calcule la performance du dispositif 16 de TFAC sur la base des nouveaux seuils de détection déterminés.

Selon l'exemple décrit, le calculateur 18 détermine la probabilité de fausse alarme du dispositif 16 de TFAC avec les seuils de détection déterminés.

Pour cela, le calculateur 18 peut mettre en oeuvre les opérations inverses de celles décrites pour l'étape d'obtention E22 dans laquelle il est expliqué comment dériver des seuils à partir d'une probabilité de fausse alarme donnée. Il s'agira ici de dériver la valeur de probabilité de fausse alarme à partir de la connaissance des seuils.

Le calculateur 18 calcule alors la performance comme le rapport entre la probabilité de fausse alarme calculée et la probabilité de fausse alarme idéale.

Plus cette valeur est proche de 1 et meilleure est la performance du détecteur 16 de TFAC.

Le procédé qui vient d'être décrit permet donc d'obtenir des mesures de la performance du dispositif 16 de TFAC de bonne qualité et ce pour toutes les environnements dans lesquels le capteur est amené à intervenir.

La mesure de cette performance peut avantageusement être utilisée dans le cadre d'un procédé d'observation d'un environnement qui comporte alors une étape de réception d'ondes provenant de l'environnement, et une étape d'analyse des ondes reçues par le dispositif 16 de TFAC pour déterminer si les ondes comportent uniquement du bruit, l'analyse étant basée sur les seuils de détection.

Dans l'exemple décrit, grâce à la mesure effectuée de la performance, le procédé d'observation comporte une étape de mise en oeuvre d'une action en fonction de la performance déterminée.

Selon un premier exemple, l'action est l'émission d'une alarme.

Typiquement, lorsque la performance est mauvaise, une alarme est émise pour indiquer que les opérations effectuées par le dispositif 16 de TFAC sont peu fiables.

L'alarme est, par exemple, une alarme sonore ou visuelle émise par une unité d'alarme que le calculateur 18 est propre à déclencher.

Selon un deuxième exemple, l'action est une demande de réitération de l'étape d'analyse avec des seuils différents.

Selon encore un autre exemple, l'action consiste à utiliser un autre dispositif 16 de TFAC du capteur 14 lorsqu'un tel dispositif 16 est présent dans le système de détection 12.

La détermination de la performance sert ici à sélectionner le dispositif 16 de TFAC le plus performant.

Le procédé de mesure qui vient d'être décrit est donc un procédé permettant de caractériser un dispositif 16 de TFAC avec précision.

D'autres modes de réalisation du procédé peuvent être considérés tout en permettant de conserver cette précision.

**Revendications**

**1.** Procédé de mesure de la performance d'un dispositif (16) de taux de fausse alarme constant d'un capteur (14),

le capteur (14) étant propre à observer un environnement, le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe,
le procédé de mesure étant mis en oeuvre par un calculateur (18) et comprenant :

- une étape d'estimation de paramètres liés aux bruits affectant le capteur (14), pour obtenir un vecteur de paramètres,
- une étape d'obtention de seuils de détection pour le dispositif (16) de taux de fausse alarme constant,
- une étape de caractérisation des erreurs d'estimations de l'estimateur du dispositif (16) de taux de fausse alarme constant, pour obtenir des paramètres relatifs aux erreurs d'estimations,
- une étape de détermination de la valeur de chaque seuil de détection susceptible d'être effectivement utilisé par le dispositif (16) de taux de fausse alarme constant du fait des erreurs d'estimations de l'estimateur du dispositif (16) de taux de fausse alarme constant pour toutes les configurations possibles du vecteur de paramètres, pour obtenir un ensemble de seuils de détection déterminés, l'étape de détermination utilisant les paramètres relatifs aux erreurs d'estimations pour déterminer chaque seuil de détection susceptible d'être effectivement utilisé par le dispositif (16) de taux de fausse alarme constant, et
- une étape de calcul de la performance du dispositif (16) de taux de fausse alarme constant sur la base des seuils de détection déterminés.

**2.** Procédé de mesure selon la revendication 1, dans lequel l'étape de calcul comporte la détermination de la probabilité de fausse alarme du dispositif (16) de taux de fausse alarme constant avec les seuils de détection déterminés.

**3.** Procédé de mesure selon la revendication 1 ou 2, dans lequel, lors de l'étape d'obtention, il est également obtenu une probabilité de fausse alarme, dite probabilité de fausse alarme idéale, associée aux performances des seuils de détection pour un fonctionnement idéal du dispositif (16) de taux de fausse alarme constant.

**4.** Procédé de mesure selon les revendications 2 et 3, dans lequel, la performance est calculée comme le rapport entre la probabilité de fausse alarme calculée et la probabilité de fausse alarme idéale.

**5.** Procédé de mesure selon l'une quelconque des revendications 1 à 4, dans lequel le vecteur de paramètres comporte au moins un paramètre lié au bruit thermique du capteur (14) et au moins un paramètre lié au bruit généré par l'environnement que le capteur (14) observe, cet au moins un paramètre lié au bruit généré par l'environnement que le capteur (14) observe caractérisant, de préférence, le fouillis de mer.

**6.** Procédé de mesure selon l'une quelconque des revendications 1 à 5, dans lequel, lors de l'étape d'obtention, les seuils de détection pour le dispositif (16) de taux de fausse alarme constant sont calculés pour que, pour toutes les configurations possibles du vecteur de paramètres, le dispositif (16) de taux de fausse alarme constant fonctionne à une probabilité de fausse alarme prédéfinie.

**7.** Procédé d'observation d'un environnement par un capteur (14) propre à observer l'environnement, le capteur (14) faisant partie d'un système de détection (12) comprenant :

- un capteur (14) propre à observer un environnement,
- un dispositif (16) de taux de fausse alarme constant du capteur (14), le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe, et
- un calculateur (18),

le procédé d'observation comportant :

- une étape de mise en oeuvre d'un procédé de mesure de la performance du dispositif (16) de taux de fausse alarme constant du capteur (14), le procédé de mesure étant selon l'une quelconque des revendications 1 à 6,
- une étape de réception d'ondes provenant de l'environnement,
- une étape d'analyse des ondes reçues par le dispositif (16) de taux de fausse alarme constant pour déterminer si les ondes comportent uniquement du bruit, et
- une étape de mise en oeuvre d'une action en fonction de la performance déterminée, l'action étant choisie parmi une émission d'une alarme, une annulation de l'analyse, une demande de réitération de l'étape d'analyse avec des seuils différents ou une utilisation d'un autre dispositif (16) de taux de fausse alarme constant du capteur (14) lorsqu'un tel dispositif (16) est présent dans le système de détection (12).

**8.** Calculateur (18) propre à mesurer la performance d'un dispositif (16) de taux de fausse alarme constant d'un capteur (14),

le capteur (14) étant propre à observer un environnement, le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe, le calculateur (18) étant propre à :

- estimer des paramètres liés aux bruits affectant le capteur (14), pour obtenir un vecteur de paramètres,
- obtenir des seuils de détection pour le dispositif (16) de taux de fausse alarme constant,
- caractériser des erreurs d'estimations de l'estimateur du dispositif (16) de taux de fausse alarme constant, pour obtenir des paramètres relatifs aux erreurs d'estimations, et
- déterminer la valeur de chaque seuil de détection susceptible d'être effectivement utilisée par le dispositif (16) de taux de fausse alarme constant du fait des erreurs d'estimations de l'estimateur du dispositif (16) de taux de fausse alarme constant pour toutes les configurations possibles du vecteur de paramètres, pour obtenir un ensemble de seuils de détection déterminés, la détermination utilisant les paramètres relatifs aux erreurs d'estimations pour déterminer chaque seuil de détection susceptible d'être effectivement utilisé par le dispositif (16) de taux de fausse alarme constant, et
- calculer la performance du dispositif (16) de taux de fausse alarme constant sur la base des seuils de détection déterminés.

**9.** Système de détection (12) comprenant :

- un capteur (14) propre à observer un environnement,
- un dispositif (16) de taux de fausse alarme constant du capteur (14), le dispositif (16) de taux de fausse alarme constant étant pourvu d'un estimateur propre à déterminer une estimation des paramètres liés aux bruits affectant le capteur (14) en fonction de paramètres liés à l'environnement que le capteur (14) observe, et

- un calculateur (18) selon la revendication 8.

10. Véhicule comportant un système de détection (12) selon la revendication 9.

10

12

14

16

18

## FIG.1

E20

E22

E24

E26

E28

FIG.2

## FIG.3

**FIG.4**

Europäisches
Patentamt

European
Patent Office

Office européen
des brevets

# RAPPORT DE RECHERCHE EUROPEENNE

Numéro de la demande

**EP 23 21 8250**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 875 912 A1 (THOMSON APPLIC RADARS CT [FR]) 31 mars 2006 (2006-03-31) * abrégé; figure 8 * * page 12, lignes 1-17, 21-32 * * page 13, lignes 27-32 * | 1-10 | INV. B62D15/02 G01S7/288 G01S13/53 |
| A | FR 3 099 450 A1 (RENAULT SAS [FR]; NISSAN MOTOR [JP]) 5 février 2021 (2021-02-05) * abrégé; figures 1-6 * * alinéas [0209], [0214] * | 1-10 | |
| A | FR 3 121 410 A1 (RENAULT SAS [FR]) 7 octobre 2022 (2022-10-07) * abrégé; figure 4 * * alinéas [0095], [0106] * | 1-10 | |

| | DOMAINES TECHNIQUES RECHERCHES (IPC) |
|---|---|
| | B62D G01S |

Le présent rapport a été établi pour toutes les revendications

| Lieu de la recherche | Date d'achèvement de la recherche | Examinateur |
|---|---|---|
| Munich | 19 avril 2024 | Cordeiro, J |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

## ANNEXE AU RAPPORT DE RECHERCHE EUROPEENNE
## RELATIF A LA DEMANDE DE BREVET EUROPEEN NO.

EP 23 21 8250

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-04-2024

| Document brevet cité au rapport de recherche | Date de publication | Membre(s) de la famille de brevet(s) | Date de publication |
|---|---|---|---|
| FR 2875912 A1 | 31-03-2006 | AUCUN | |
| FR 3099450 A1 | 05-02-2021 | AUCUN | |
| FR 3121410 A1 | 07-10-2022 | CN 117120323 A | 24-11-2023 |
| | | EP 4320026 A1 | 14-02-2024 |
| | | FR 3121410 A1 | 07-10-2022 |
| | | JP 2024514548 A | 02-04-2024 |
| | | KR 20230166124 A | 06-12-2023 |
| | | WO 2022214268 A1 | 13-10-2022 |

EPO FORM P0460

Pour tout renseignement concernant cette annexe : voir Journal Officiel de l'Office européen des brevets, No.12/82